# EUROPEAN PATENT APPLICATION

(11) **EP 4 001 964 A1**
(43) Date of publication of application: **25.05.2022**
(21) Application number: 19938717.6
(22) Date of filing: 20.07.2019
(51) Int. Cl.: G01S 17/08, G01S 7/481

(54) **LIDAR SYSTEM**

(30) Priority: 19.07.2019 CN 201910654293
(71) Applicant: Zvision Technologies Co., Ltd., Beijing 100089 (CN)
(72) Inventor: SHI, Tuo, Beijing 100096 (CN)
(74) Representative: Lavoix
(86) International application number: PCT/CN2019/096928
(87) International publication number: WO 2021/012132

(57) **Abstract**

A lidar system includes a laser emitting light source (11), a scanning unit (12), a transmitting-receiving-coaxial optical unit (13) and a differential reception unit (14); the laser emitting light source (11) includes a laser (103) and a modulator (105); the transmitting-receiving-coaxial optical unit (13) is used for receiving a frequency-modulated emission light signal, and passing the same to the scanning unit (12) and the differential reception unit (14), and is also used for passing a reflection light signal to the differential reception unit (14); the scanning unit (12) is used for reflecting the frequency-modulated emission light signal to a target object at a deflectable angle, and reflecting the reflection light signal from the target object to the transmitting-receiving-coaxial optical unit (13); and the differential reception unit (14) is used for differentially receiving the reflection light signal according to the received frequency-modulated emission light signal. By using a differential reception method, the laser radar system reduces noise, increases the signal-to-noise ratio, and increases the detection distance.

## Description

### TECHNICAL FIELD

The invention relates to a lidar system, in particular to a frequency-modulated lidar system.

### BACKGROUND

A laser radar (LIDAR) is a device that measures information such as position, velocity, and the like of a target object by emitting a laser beam to the target object and receiving a beam reflected from the target object. The current lidar generally adopts a Time Of Flight (TOF) technology to realize ranging. In recent years, Frequency-modulated Continuous Wave (FMCW) lidar has been developed to realize coherent ranging.

An existing FMCW lidar adopts a mechanical scanning scheme to control an angle of an emitted light beam, so that scanning of a three-dimensional space is realized. Since the scheme employs mechanical scanning, it has the following disadvantages: on one hand, the mass production cost is higher, and on the other hand, it is difficult to pass the reliability certification of the vehicle regulation.

Another existing FMCW lidar adopts a circulator scheme for splitting emitted and received signals, however, it is not easy to efficiently couple light rays received by a micro-electro-mechanical system (MEMS) into a fiber receiving end of the circulator. Especially, the receiving end of the circulator is extremely sensitive to the position of a light spot of the incident light, the efficiency of collecting the incident light is very low under the condition that the MEMS scans back and forth at a high speed, and such an FMCW lidar has large noise and a short detection distance.

### SUMMARY

The technical problem to be solved by the invention is to provide a Frequency-modulated Continuous Wave (FMCW) lidar system, which reduces noise and increases the signal-to-noise ratio by using a differential reception mode, thereby increasing the detection distance.

The lidar system of the invention comprises: a laser emitting light source, a scanning unit, a transmitting-receiving-coaxial optical unit, and a differential reception unit. The laser emitting light source comprises a laser and a modulator, where the laser is configured to generate an original emission light signal, and the modulator is configured to frequency-modulate the original emission light to generate a frequency-modulated emission light signal; the transmitting-receiving-coaxial optical unit is configured to receive the frequency-modulated emission light signal and respectively pass the frequency-modulated emission light signal to the scanning unit and the differential reception unit; the scanning unit is configured to reflect the frequency-modulated emission light signal to a target object at a deflectable angle and reflect a reflected light signal from the target object to the transmitting-receiving-coaxial optical unit; the transmitting-receiving-coaxial optical unit is further configured to transmit the reflected light signal to the differential reception unit; and the differential reception unit is configured to differentially receive the reflected light signal based on the received frequency-modulated emission light signal.

Optionally, the lidar system further comprises a control and digital signal processing unit, respectively connected to the laser emitting light source, the scanning unit and the differential reception unit, and configured to control the laser emitting light source, the scanning unit and the differential reception unit through control signals.

Optionally, in the lidar system, the scanning unit comprises a micro-electro-mechanical system (MEMS) micro-vibrating lens.

Optionally, in the lidar system, the laser is an external cavity laser having a linewidth of less than or equal to 200 kHz.

Optionally, in the lidar system, the transmitting-receiving-coaxial optical unit comprises an emission collimating lens, a first light splitter, a first polarization beam splitter/combiner, a first quarter wave plate, a total reflection mirror, a second quarter wave plate, a third quarter wave plate, a second polarization beam splitter-combiner, a first focusing lens, and a second focusing lens, where the emission collimating lens is configured to form a collimated light from the frequency-modulated emission light signal generated by the modulator; the first light splitter is configured to split the collimated light into a first beam of light and a second beam of light; the total reflection mirror is configured to reflect the first beam of light; the second quarter wave plate is configured to enable a polarization direction of the first beam of light reflected by the total reflection mirror to form 45 degrees with respect to a polarization direction of the second polarization beam splitter-combiner and pass the first beam of light to the second polarization beam splitter-combiner; the first polarization beam splitter-combiner is configured to receive the second beam of light and pass it to the first quarter wave plate; the first quarter wave plate is configured to receive the second beam of light subjected to the first polarization beam splitter-combiner, reflect the second beam of light to the target object through the scanning unit, and enable a polarization direction of the reflected light signal from the target object to be vertical to a polarization direction of the frequency-modulated emission light signal generated by the modulator, so that it is totally reflected by the first polarization beam splitter-combiner to the third quarter wave plate; the first polarization beam splitter-combiner is further configured to totally reflect the reflected light signal subjected to the first quarter wave plate to the third quarter wave plate; the third quarter wave plate is configured to polarize the light totally reflected by the first polarization beam splitter-combiner by 45 degrees and pass the polarized light to the second polarization beam splitter-combiner; the second polarization beam splitter-combiner is configured to split the received light; and the first focusing lens and the second focusing lens are configured to focus the lights split by the second polarization beam splitter-combiner respectively, to obtain a first local oscillation source and a second local oscillation source originated from the first beam of light and a first reflected light signal and a second reflected light signal originated from the second beam of light.

Optionally, in the lidar system, the differential reception unit includes a first reception detector, a second reception detector and a differential receiver; the first reception detector is configured to receive a first beat frequency signal formed by superposing the first local oscillation source and the first reflected light signal and process the first beat frequency signal to obtain a first electrical signal; the second reception detector is configured to receive a second beat frequency signal formed by superposing the second local oscillation source and the second reflected light signal and process the second beat frequency signal to obtain a second electrical signal; and the differential receiver is connected with the first reception detector and the second reception detector and is configured to receive the first electrical signal and the second electrical signal.

Optionally, the lidar system further comprises a delay calibration module, configured to calibrate a signal delay between the first electrical signal and the second electrical signal.

Optionally, in the lidar system, the modulator comprises a phase modulation function for phase encoding the frequency-modulated emission light signal.

Optionally, in the lidar system, the micro-electro-mechanical system (MEMS) micro-vibrating lens comprises a two-dimensional MEMS micro-vibrating lens, for realizing deflection in both horizontal and vertical directions under the action of a driving signal of the control and digital signal processing unit.

Optionally, in the lidar system, the micro-electro-mechanical system (MEMS) micro-vibrating lens includes two one-dimensional MEMS micro-vibrating lens, where one of them is for realizing deflection in a horizontal direction under the action of a driving signal, and the other thereof is for realizing deflection in a vertical direction under the action of a driving signal of the control and digital signal processing unit.

The lidar system of the invention adopts the MEMS lidar in a frequency-modulated continuous wave receiving and transmitting mode, and adopts a differential reception mode to greatly suppress noise and improve the signal-to-noise ratio to realize a farther detection distance limit. Furthermore, by use of the special transmitting-receiving-coaxial optical unit, high efficient optical signal collection can be realized, and the sensitivity of the receiving end is greatly improved.

### BRIEF DESCRIPTION OF THE DRAWINGS

Fig. 1 is a block diagram illustrating a lidar system in accordance with an exemplary embodiment.
Fig. 2 is a block diagram illustrating a lidar system in accordance with another exemplary embodiment.
Fig. 3 is a block schematic diagram illustrating a lidar system in accordance with an exemplary embodiment.
Fig. 4 is a block schematic diagram illustrating a lidar system in accordance with another exemplary embodiment.

### DETAILED DESCRIPTION

Reference will now be made in detail to the exemplary embodiments, examples of which are illustrated in the accompanying drawings. The following description refers to the accompanying drawings in which the same numbers in different drawings represent the same or similar elements unless otherwise indicated. The implementations described in the following exemplary examples do not represent all implementations consistent with the present invention. Rather, they are merely examples of systems consistent with certain aspects of the invention, as detailed in the appended claims.

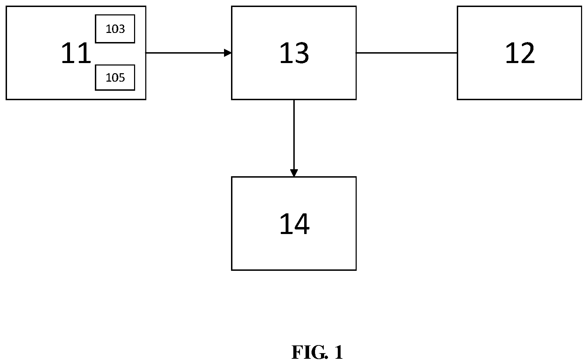

Fig. 1 is a block diagram illustrating a lidar system of the present invention in accordance with an exemplary embodiment. As shown in Fig. 1, the lidar system of the present invention comprises a laser emitting light source 11, a scanning unit 12, a transmitting-receiving-coaxial optical unit 13, and a differential reception unit 14. The laser emitting light source 11 comprises a laser 103 and a modulator 105, where the laser 103 is configured to generate an original emission light signal, and the modulator 105 is configured to frequency-modulate the original emission light signal to generate a frequency-modulated emission light signal; the transmitting-receiving-coaxial optical unit 13 is configured to receive the frequency-modulated emission light signal from the laser source emitting light source 11 and respectively pass the frequency-modulated emission light signal to the scanning unit 12 and the differential reception unit 14; the scanning unit 12 is configured to reflect the frequency-modulated emission light signal to a target object at a deflectable angle and reflect a reflected light signal from the target object to the transmitting-receiving-coaxial optical unit 13. The transmitting-receiving-coaxial optical unit 13 is further configured to transmit the reflected light signal to the differential reception unit 14. The differential reception unit is configured to differentially receive the reflected light signal based on the received frequency-modulated emission light signal.

The lidar system of the invention is a lidar adopting a frequency-modulated continuous wave receiving and transmitting mode, and by use of a differential reception mode, noise is greatly reduced and the signal-to-noise ratio is improved, thereby realizing farther detection distance.

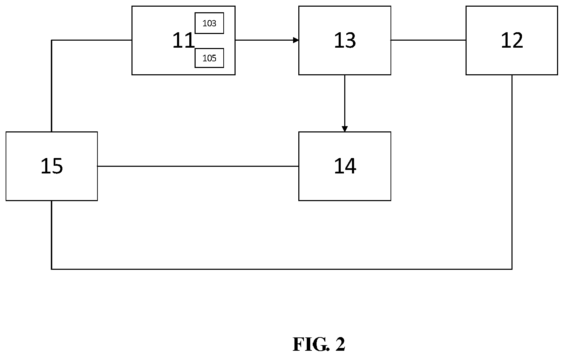

Fig. 2 is a block diagram of a lidar system of the present invention in accordance with another embodiment. As shown in Fig. 2, the lidar system further comprises a control and digital signal processing unit 15, respectively connected to the laser emitting light source 11, the scanning unit 12 and the differential reception unit 14, and configured to control the laser emitting light source 11, the scanning unit 12 and the differential reception unit 14 through control signals.

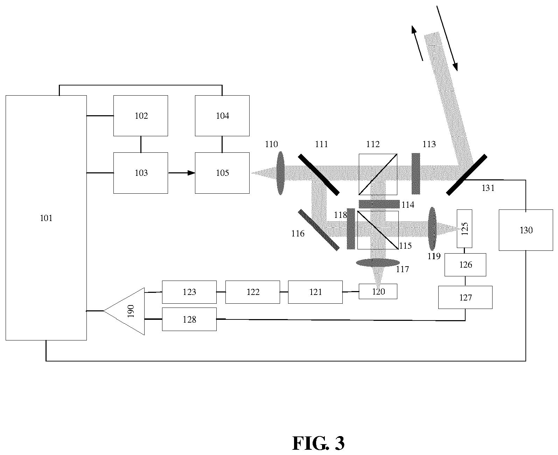

Fig. 3 is a block diagram of a lidar system of the present invention in accordance with another embodiment. Referring to Fig. 3, the control and digital signal processing system 15 may include an FPGA (Field-Programmable Gate Array) 101, a MEMS driver 130, a semiconductor Laser (LD) driver 102, and a modulator driver 104. The FPGA 101 may also be replaced with an MPSoC chip. In the following description, the structure of the control and digital signal processing system 15 will be described by taking the FPGA 101 as an example. The MEMS driver 130 is connected to the FPGA 101, and the operation of the MEMS driver 130 is controlled by the FPGA 101. The LD driver 102 and the modulator driver 104 are both connected to the FPGA 101; while the LD driver 102 is connected to the laser 103 and the modulator driver 104 is connected to the modulator 105 for control of the laser emitting light source 11.

According to an embodiment of the invention, the laser 103 and the modulator 105 are a silicon-based monolithically integrated chip.

According to an embodiment of the invention, the laser 103 may be an external cavity laser with a typical linewidth less than or equal to 200 kHz. By use of a laser with a small linewidth, the noise can be effectively reduced.

According to an embodiment of the present invention, the laser 103 may be a semiconductor laser, or may be another type of laser, which is not specifically limited in this embodiment.

According to an embodiment of the present invention, the modulator 105 is a Mach-Zehnder modulator (MZM) whose modulator waveguide section may comprise a lithium niobate material, a silicon material, a polymer material, or the like.

According to an embodiment of the present invention, the modulator 105 is a single sideband frequency modulator, or a dual sideband frequency modulator. The control signal output by the FPGA 101 to the modulator 105 may be a frequency sweep signal, and a direct current laser signal is frequency-modulated by controlling the modulator 105. Preferably, the signal obtained after frequency-modulating the original emission light by the modulator 105 may be FMCW.

According to an embodiment of the present invention, the modulator 105 further includes a phase modulation function for phase encoding the modulated emission light signal. In a specific implementation process, phase encoding can be realized further by a quadrature phase keying modulation mode on the basis of frequency modulation. By means of the phase encoding, a crosstalk (equivalent to an electronic tag) can be added to the emission light signal of each lidar, and then the lidar can identify whether the reflected light comes from the lidar itself or from other lidar systems according to the encoding, upon receiving the reflected light.

According to an embodiment of the present invention, the transmitting-receiving-coaxial optical system 13 includes a transmitting collimation lens 110, a first light splitter 111, a first polarization beam splitter-combiner 112, a first quarter wave plate 113, a total reflection mirror 116, a second quarter wave plate 118, a third quarter wave plate 114, a second polarization beam splitter-combiner 115, a first focusing lens 117, and a second focusing lens 119. The lidar system of the invention can realize high efficient light signal collection by adopting the special transmitting-receiving-coaxial optical unit, thereby improving the sensitivity of the receiving end.

An original emission light signal emitted by the laser 103 is polarized light, and a polarization direction of a frequency-modulated emission light signal generated after the original emission light signal is modulated by the modulator 105 is a first polarization direction. The polarization directions of the first polarization beam splitter-combiner 112 and the second polarization beam splitter-combiner 115 are both set to be the same as the first polarization direction, i.e., the same as or parallel to the first polarization direction. The optical axial planes of the first quarter wave plate 113, the second quarter wave plate 118 and the third quarter wave plate 114 form an angle of 45 degrees with respect to the first polarization direction.

The frequency-modulated emission light signal may be amplified by an optical amplifier, then collimated by the emission collimating lens 110 to form collimated light, and split into a first beam of light and a second beam of light by the first light splitter 111, where the first beam of light is reflected, and after passing through the total reflection mirror 116 and the second quarter wave plate 118, has a polarization direction at 45 degrees with respect to the polarization direction of the second polarization beam splitter-combiner 115, which is split again after passing through the second polarization beam splitter-combiner 115, and is focused on photosensitive surfaces of the first reception detector 120 and the second reception detector 125 by the first focusing lens 117 and the second focusing lens 119, respectively, to serve as a first local oscillation source and a second local oscillation source, respectively. The second beam of light, after being transmitted, passes through the first polarization beam splitter-combiner 112, then passes through the first quarter wave plate 113, and is reflected to the forward space to be measured through an MEMS micro-vibrating lens 131 (described in detail below) in the scanning unit 12, and irradiates the surface of the target object; the reflected light signal after scattering reflection from the surface of the target object returns to the surface of the MEMS micro-vibrating lens 131 for reflection. After passing through the first quarter wave plate 113, the polarization of the light signal is rotated by 90 degrees to be perpendicular to the first polarization direction, and thus the light signal is then totally reflected by the first polarization beam splitter-combiner 112. Afterwards, after passing through the third quarter wave plate 114, the polarization direction is changed by 45 degrees, and after passing through the second polarization beam splitter-combiner 115, the reflected light signal is split again, and is focused on the photosensitive surfaces of the first reception detector 120 and the second reception detector 125 through the first focusing lens 117 and the second focusing lens 119, respectively, to form a first reflected light signal and a second reflected light signal, respectively.

As shown in Fig. 3, the differential reception unit 14 includes a first reception detector 120, a second reception detector 125, and a differential receiver 190, where the first reception detector 120 and the second reception detector 125 may be photodetectors . The first reception detector 120 is configured to receive a first beat frequency signal formed by superposing the first local oscillation source and the first reflected light signal, where a phase of the first beat frequency signal is a first phase, and process the first beat frequency signal to obtain a first electrical signal; the second reception detector 125 is configured to receive a second beat frequency signal formed by superposing the second local oscillation source and the second reflected light signal, where a phase of the second beat frequency signal is a second phase, and process the second beat frequency signal to obtain a second electrical signal, where a difference between the first phase and the second phase is 180 degrees, so as to form differential detection; the differential receiver 190 is connected to the first reception detector 190 and the second reception detector 125 for receiving the first electrical signal and the second electrical signal. The lidar system of the invention greatly reduces noise and improves the signal-to-noise ratio by use of a differential reception mode, thereby realizing farther detection distance.

As shown in Fig. 3, in one embodiment, in addition to the first reception detector 120, the second reception detector 125, and the differential receiver 190, the differential reception unit 14 may further include a first transimpedance amplifier (TIA) 121, a first direct-current filter and low-pass filter 122, a first analog-to-digital converter 123, a second transimpedance amplifier (TIA) 126, a second direct-current filter and low-pass filter 127, and a second analog-to-digital converter 128, . After being amplified by the first transimpedance amplifier (TIA)121, a signal received by the first reception detector 120 passes through the first direct-current filter and low-pass filter circuit 122 and the first analog-to-digital converter chip 123 in sequence to complete analog-to-digital conversion, and is input to the FPGA 101 for digital signal processing; after being amplified by the second transimpedance amplifier (TIA) 126, a signal received by the second reception detector 125 passes through the second direct-current filter and low-pass filter circuit 127 and the second analog-to-digital converter chip 128 in sequence to complete analog-to-digital conversion, and is input to the FPGA 101 for digital signal processing.

According to an embodiment of the invention, as shown in Fig. 3, the differential receiver 190 may be configured to connect with a Field Programmable Gate Array (FPGA) 101 of the control and digital signal processing system 15. The differential receiver 190 may also be a part of the Field Programmable Gate Array (FPGA) 101 of the control and digital signal processing system 15, and is not specifically limited in this embodiment.

After receiving output signals of the first analog-to-digital converter chip 123 and the second analog-to-digital converter chip 128, the FPGA 101 may also calibrate a signal delay between the first electrical signal and the second electrical signal through a delay calibration module, so as to accurately receive the first electrical signal and the second electrical signal generated by the first reception detector 120 and the second reception detector 125, and prevent an error caused by misalignment of two signals due to the existence of the delay. According to an embodiment of the present invention, the delay calibration module may be included in the control and digital signal processing unit 15, or the delay calibration module may be a separate unit.

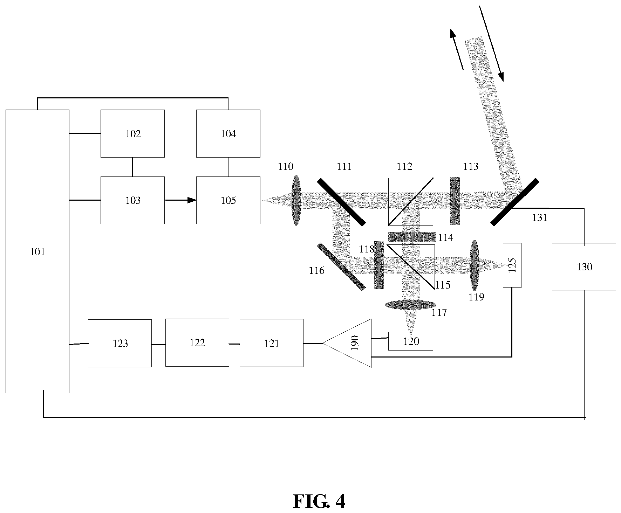

According to an embodiment of the present invention, as shown in Fig. 4, the first reception detector 120 and the second reception detector 125 may be directly connected to the differential receiver 190, and the differential receiver 190 is connected to the first transimpedance amplifier (TIA)121, the first direct-current filter and low-pass filter circuit 122, the first analog-to-digital converter chip 123 and the FPGA 101 in sequence.

According to an embodiment of the present invention, the scanning unit 12 may include MEMS mirrors, prisms, mechanical mirrors, polarization gratings, Optical Phased Arrays (OPAs), and the like. For MEMS mirrors, the mirror surface is rotated or translated in one-dimensional or two-dimensional direction under electrostatic/piezoelectric/electromagnetic actuation.

According to an embodiment of the present invention, the scanning unit 12 includes a MEMS micro-vibrating lens 131. The MEMS micro-vibrating lens 131 may deflect two-dimensionally under the control of the FPGA 101, so as to realize laser scan in a two-dimensional space.

According to an embodiment of the present invention, the MEMS micro-vibrating lens 131 may be a two-dimensional micro-electro-mechanical system (MEMS) micro-vibrating lens, which is deflected in both horizontal and vertical directions by the driving signal of the control and digital signal processing system 15.

According to another embodiment of the present invention, the MEMS micro-vibrating lens 131 may include two one-dimensional MEMS micro-vibrating lens, where one of the them is configured to deflect in a horizontal direction under the action of a driving signal, and the other thereof is configured to deflect in a vertical direction under the action of a driving signal, and the two one-dimensional MEMS micro-vibrating lens are positioned as follows: after a laser light is reflected by one one-dimensional MEMS micro-vibrating lens, the laser light reaches the surface of the other one-dimensional MEMS micro-vibrating lens and is reflected to the space, so as to realize laser scan at any angle in the two-dimensional space.

The lidar system of the invention adopts a Frequency-Modulated Continuous Wave (FMCW) transceiving mode, and greatly reduces noise and improves the signal-to-noise ratio by use of the differential reception mode, thereby realizing farther detection distance; further, by use of a special optical system, the efficiency of the transmitting and receiving optical system is greatly improved through the control of optical polarization, high efficient light signal collection is achieved, and the sensitivity of the receiving end is greatly improved; specifically, the micro-electro-mechanical system micro-vibrating lens is used for achieving the direction control scanning of light beams to achieve efficient light signal collection.

The above embodiments merely are specific implementations of the invention for illustrating the technical solutions of the invention, rather than limiting the invention, and the scope of the present invention is not limited to the above embodiments. Although the present invention has been described in detail with reference to the foregoing embodiments, it should be understood by those skilled in the art that: those skilled in the art can still make modifications to the technical solutions recited in the foregoing embodiments or readily conceive of their changes, or make equivalent substitutions for some technical features, within the scope of the disclosure of the invention; such modifications, changes or substitutions do not depart from the spirit and scope of the embodiments of the present invention, and they should be construed as being included therein. Therefore, the protection scope of the present invention shall be subject to the protection scope of the claims.

## Claims

1. A lidar system comprising: a laser emitting light source, a scanning unit, a transmitting-receiving-coaxial optical unit, and a differential reception unit; wherein
the laser emitting light source comprises a laser and a modulator, wherein the laser is configured to generate an original emission light signal, and the modulator is configured to frequency-modulate the original emission light signal to generate a frequency-modulated emission light signal;
the transmitting-receiving-coaxial optical unit is configured to receive the frequency-modulated emission light signal and respectively pass the frequency-modulated emission light signal to the scanning unit and the differential reception unit;
the scanning unit is configured to reflect the frequency-modulated emission light signal to a target object at a deflectable angle and reflect a reflected light signal from the target object to the transmitting-receiving-coaxial optical unit;
the transmitting-receiving-coaxial optical unit is further configured to pass the reflected light signal to the differential reception unit; and
the differential reception unit is configured to differentially receive the reflected light signal based on the received frequency-modulated emission light signal.

2. The lidar system according to claim 1, further comprising a control and digital signal processing unit, respectively connected to the laser emitting light source, the scanning unit and the differential reception unit, and configured to control the laser emitting light source, the scanning unit and the differential reception unit through control signals.

3. The lidar system according to claim 1, wherein the scanning unit comprises a micro-electro-mechanical system (MEMS) micro-vibrating lens.

4. The lidar system according to claim 1, wherein the laser is an external cavity laser having a linewidth of less than or equal to 200 kHz.

5. The lidar system according to any of claims 1 to 4, wherein the transmitting-receiving-coaxial optical unit comprises an emission collimating lens, a first light splitter, a first polarization beam splitter-combiner, a first quarter wave plate, a total reflection mirror, a second quarter wave plate, a third quarter wave plate, a second polarization beam splitter-combiner, a first focusing lens, and a second focusing lens, wherein
the emission collimating lens is configured to form a collimated light from the frequency-modulated emission light signal generated by the modulator;
the first light splitter is configured to split the collimated light into a first beam of light and a second beam of light;
the total reflection mirror is configured to reflect the first beam of light;
the second quarter wave plate is configured to enable a polarization direction of the first beam of light reflected by the total reflection mirror to form 45 degrees with respect to a polarization direction of the second polarization beam splitter-combiner and pass the first beam of light to the second polarization beam splitter-combiner;
the first polarization beam splitter-combiner is configured to receive the second beam of light and pass the second beam of light to the first quarter wave plate;
the first quarter wave plate is configured to receive the second beam of light subjected to the first polarization beam splitter-combiner, reflect the second beam of light to the target object through the scanning unit, and enable a polarization direction of the reflected light signal from the target object to be vertical to a polarization direction of the frequency-modulated emission light signal generated by the modulator, so that the reflected light signal is totally reflected by the first polarization beam splitter-combiner to the third quarter wave plate;
the first polarization beam splitter-combiner is further configured to totally reflect the reflected light signal subjected to the first quarter wave plate to the third quarter wave plate;
the third quarter wave plate is configured to polarize the light totally reflected by the first polarization beam splitter-combiner by 45 degrees and pass the polarized light to the second polarization beam splitter-combiner;
the second polarization beam splitter-combiner is configured to split the received lights; and
the first focusing lens and the second focusing lens are configured to focus the lights split by the second polarization beam splitter-combiner respectively, to obtain a first local oscillation source and a second local oscillation source originated from the first beam of light and a first reflected light signal and a second reflected light signal originated from the second beam of light.

6. The lidar system according to claim 5, wherein the differential reception unit includes a first reception detector, a second reception detector and a differential receiver;
the first reception detector is configured to receive a first beat frequency signal formed by superposing the first local oscillation source and the first reflected light signal and process the first beat frequency signal to obtain a first electrical signal;
the second reception detector is configured to receive a second beat frequency signal formed by superposing the second local oscillation source and the second reflected light signal and process the second beat frequency signal to obtain a second electrical signal; and
the differential receiver is connected with the first reception detector and the second reception detector and is configured to receive the first electrical signal and the second electrical signal.

7. The lidar system according to claim 6, further comprising a delay calibration module, configured to calibrate a signal delay between the first electrical signal and the second electrical signal.

8. The lidar system according to claim 1, wherein the modulator comprises a phase modulation function for phase encoding the frequency-modulated emission light signal.

9. The lidar system according to claim 3, wherein the micro-electro-mechanical system (MEMS) micro-vibrating lens comprises a two-dimensional MEMS micro-vibrating lens, for realizing deflection in both horizontal and vertical directions under the action of driving signals of the control and digital signal processing unit.

10. The lidar system according to claim 3, wherein the micro-electro-mechanical system (MEMS) micro-vibrating lens includes two one-dimensional micro-electro-mechanical system (MEMS) micro-vibrating lens , wherein one of the two MEMS micro-vibrating lens is for realizing deflection in a horizontal direction under the action of a driving signal, and the other of the two MEMS micro-vibrating lens is for realizing deflection in a vertical direction under the action of a driving signal of the control and digital signal processing unit.
